# EUROPEAN PATENT SPECIFICATION

(11) **EP 2 695 694 B1**
(45) Date of publication and mention of the grant of the patent: **30.07.2014**
(21) Application number: 12460056.0
(22) Date of filing: 28.08.2012
(51) Int. Cl.: B23K 9/02, B23K 9/025, B23K 9/028, B23K 9/16, B23K 26/14, F22B 37/00, F22B 37/10, F22B 37/20, B23K 28/02

(54) **Method of welding of elements for the power industry, particulary of sealed wall panels of power boilers using MIG/MAG and laser welding**
Verfahren zum Schweißen von Element für die Energiewirtschaft, insbesondere von versiegelten Wandtafeln von Hochleistungskesseln unter Verwendung MSG-Laser-Schweissen
Procédé de soudage d'éléments pour l'industrie électrique, en particulier de panneaux de paroi étanche des chaudières industrielles, en utilisant un soudage MIG/MAG et laser

(30) Priority: 13.07.2012 PL 39994712
(43) Date of publication of application: 12.02.2014
(73) Proprietor: Energoinstal S.A., 40-203 Katowice (PL)
(72) Inventor: Adamiec, Janusz, 40-071 Katowice (PL)
(74) Representative: Maslowski, Andrzej

(56) References cited:
- CN-A- 102 126 088
- DE-A1- 19 924 905
- JP-A- 07 016 745
- US-A- 5 532 445
- US-A1- 2003 234 241

## Description

The subject of this invention is a method of welding of element for the power industry, particularly of sealed wall panels, and move particularly for boilers and steam generators for the power industry.

At present sealed wall panels are welded using the submerged arc welding method, with two head and four head welding machines used in the process. Welding is effected under flux, in the form of both side welding at a welding speed of ca. 1 m/min.

The Japanese patent JP2001334377 teaches of a butt welding method using a laser beam, by which working time is shortened while keeping high welding quality in a butt welding, where a laser beam and an arc are used. According to the disclosed solution, the gap (opening) on the heat input side of a cut part is accordingly larger than the gap on the opposing side face, and an almost Y-shape is formed in the cross section when a plate is cut by using a gas or the like. End faces on the heat input side are butted to each other when members to be welded are cut by using a gas or the like, and the end faces of the butted members form a Y-shaped gap. The face side where the gap between the members to be welded is larger is irradiated with the laser beam and the arc, and the butt welding is performed by jointly using the laser beam and the arc, where a laser beam induced plasma introduces arc plasma into the bottom part of the groove, and deep penetration is realised.

The Japanese patent specification JP07/016475, on which is based the preamble of claim 1, discloses equipment to weld plate between tubes to a plurality of tubes. The equipment described therein enables positioning the tubes and plates individually in the Z direction, and holding the whole assembly of the tubes and plates simultaneously in the X direction. Plate supporting rollers hold plates between tubes, and the plates between tubes are positioned in the Z direction. The assembly is held in the X direction by the pushing action by the X-direction supporting roller driving means and the tubes and plates are relatively positioned in the X direction. Thus, the welded panel with high welding quality and with high precision in shape can be obtained without generating the positional deviation between the steel tubes and the metallic plates.

The Chinese patent application CN102126088 describes a combined process of laser arc composite welding of a thick plate T-joint. Two welding guns and two laser beams are arranged at both sides of a vertical plate of the thick plate T-joint, wherein the laser beams and the central axes of the welding guns are arranged on the same plane and all form an angle of 10-50° with the face plate of the thick plate T-joint, the optical axes of the laser beams and the central axes of the welding guns form an angle of 25-45°, and the distance from the incidence point of the laser beam on the part to be welded to the tail end of a welding wire of each welding gun is 2-6 mm. The invention solves the problem of low welding efficiency existing in the traditional welding method for the thick plate T-joint.

The method according to the present invention of welding sealed wall panels, particularly for boilers and steam generators for the power industry is defined in claim 1.

In a further embodiment of the invention, where laser welding with cold or hot wire is applied, the tubes that form sealed wall panels are welded to flat bars by means of a high power fibre laser, the beam of which is irradiated into the molten pool formed in the process of MAG welding with noble gas shielding or it is trailing immediately behind it at a distance of up to 10 mm, with filler wire fed into the focal point of the laser beam or into the molten pool.

The solution according to the invention enables increasing the welding speed to over 1 m/min and providing a convex weld face and root, whereas the ratio of weld height to flat bar width is at least 1. In the method according to the invention, welding is performed with thorough penetration minimising thereby welding deformations and reducing the heat affected zone to a very narrow area. The welding method according to the invention imposes no restrictions on the lengths of the members joined.

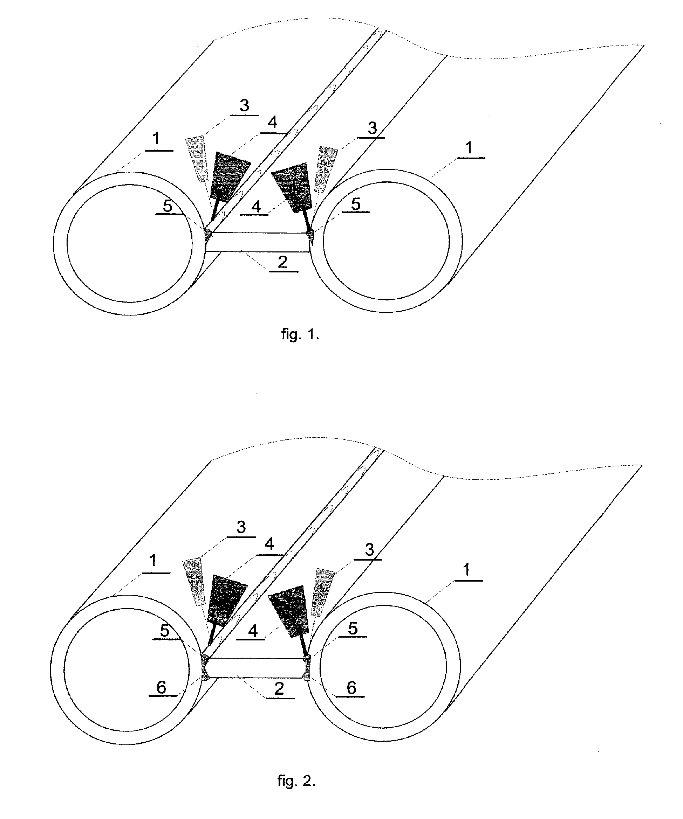

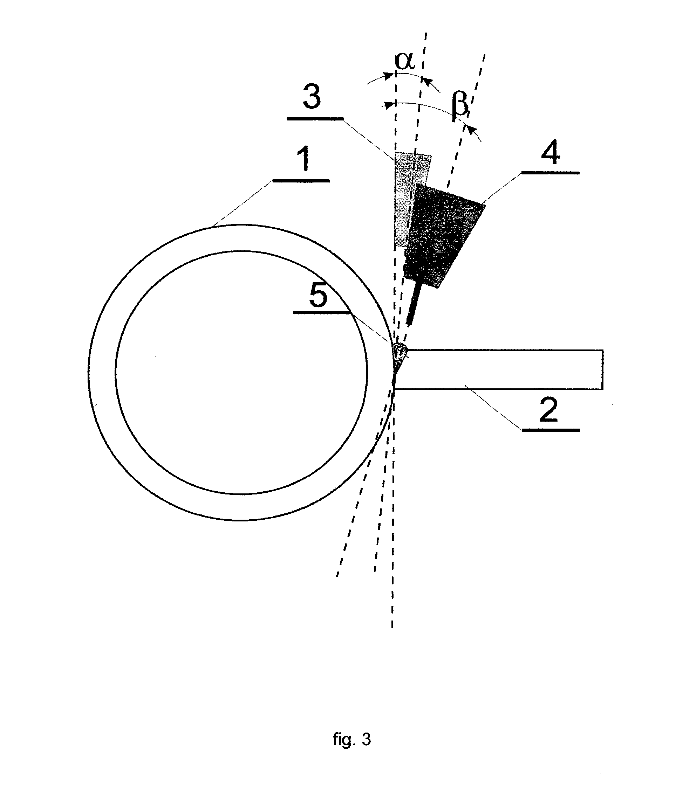

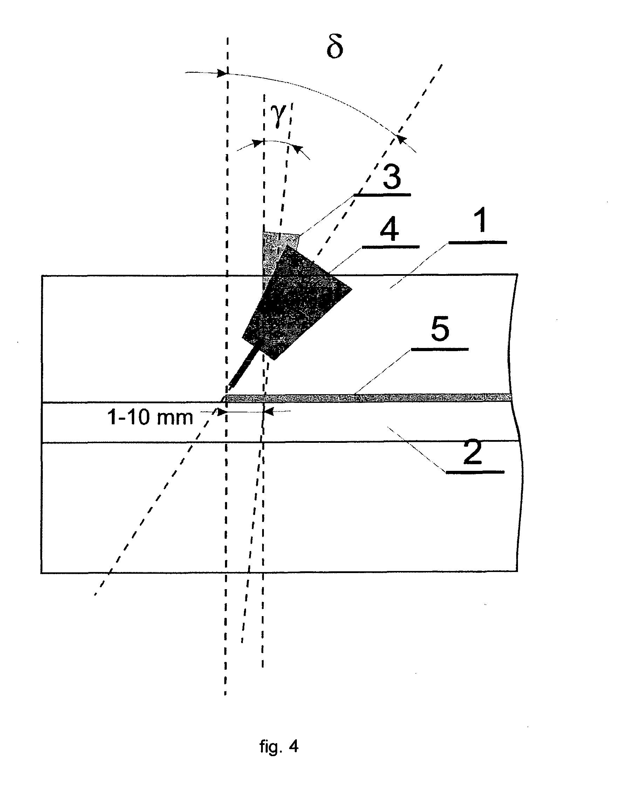

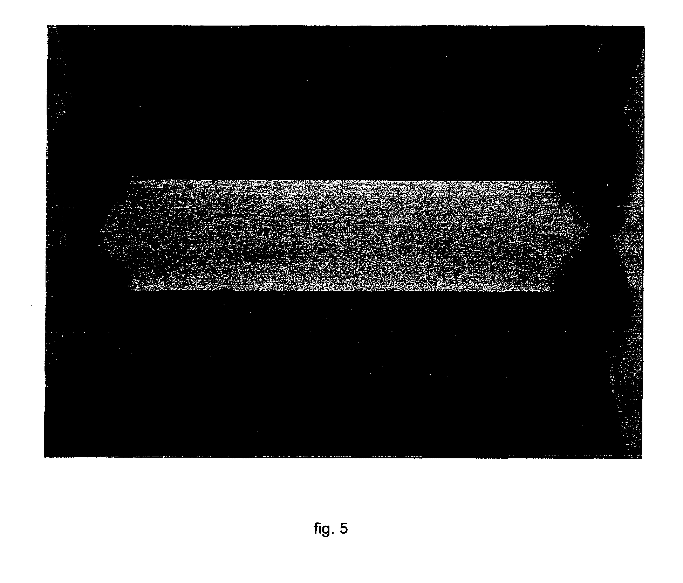

The present invention is explained by way of an example embodiment illustrated in drawing figures, wherein fig. 1 and fig. 2 are a schematic representation of the process of welding of sealed wall panels with one weld joint and with two weld joints, respectively, between the tubes and the flat bar joining the tubes, and wherein fig. 3 and fig. 4 show the optimum angles of the laser beam and MAG process electric arc in plane XZ (fig. 3) and in plane YZ (fig. 4), and wherein fig. 5 is a photographic image of a macrosection of a double-sided weld obtained using the hybrid welding system.

Panels of S235GH grade steel - 57x5 mm tube - are welded to a 20x5 mm flat bar. The joint is realised as a plain butt weld at a welding speed of 4 m/min. Welding is effected using the MAG process with Ar/CO₂ shielding gas, and laser beam welding using a 12 kW disk laser and inert shielding gas. MAG welding was applied first, with the electric arc positioned at an angle β of 40-80° in the XZ plane and at an angle δ of 40-80° in the YZ plane, followed by remelting with the laser beam positioned at an angle α of 1-5° in the XZ plane and at an angle γ of 1-5° in the YZ plane. Fig. 1 shows two adjacent tubes **1** of the sealed wall panel joined by means of flat bar **2** and positions of laser heads **3** and MAG process heads and the first weld **5** of a double-sided joint; fig. 2 shows the arrangement as above, with two welds **5**, **6** of the double-sided joint. Interrelations between the MAG process electric arc angles and the angles of incidence of the laser beam in planes XZ and YZ are illustrated in figs. 3 and 4. The hardness of the joint is not more than 380HV.

## Claims

1. A method of welding of elements (1, 2) for the power industry, particularly of sealed wall panels (2) of power boilers and steam generators, wherein tubes (1) that form sealed wall panels are joined with flat bars (2) by means of a high power fibre laser (3), wherein welding is realised as a double sided plain butt welding with no bevelling of the faces being joined, **characterized in that** welding is realized at a speed of more than 1 m/min, while the laser beam is either irradiated into a molten pool, such pool being formed in the process of MAG welding (4) with noble gas shielding, or the laser beam is trailing up to 10 mm behind such pool, with the MAG process electric arc (3) positioned at an angle β of 40-80° in the XZ plane and at an angle δ of 40-80° in the YZ plane, the weld (5) being remelted afterwards with the laser beam positioned at an angle of incidence α of 1-5° in the XZ plane and at an angle γ of 1-5° in the YZ plane.

2. A method of welding of elements for the power industry according to claim 1, **characterised in that**
filler wire is fed into the focal point of the laser beam or into the molten pool.

## Patentansprüche

1. Verfahren zum Schweißen von Elementen (1, 2) für die Energiewirtschaft, insbesondere von versiegelten Wandtafeln von Hochleistungskesseln und Dampferzeugern, in welchen die versiegelten Wandtafeln bildenden Rohre mit den Flachgestängen (2) unter Verwendung von MSG - Laser- Schweißen (3) verbindet werden, wobei das Schweißen als beidseitiges Stumpfschweißen mit I - Nähten ohne die zum verbinden vorgesehenen Ränder zu facettieren erfolgt, **dadurch gekennzeichnet, dass** das Schweißen mit einer Geschwindigkeit über 1 m/min realisiert wird, wo der Laserstrahl durch das Schmelzbad vom flüssigem Metall durchgeführt wird, das beim Schweißen mit der MAG Methode (4) im Schutz von Edelgasen gebildet wurde oder in direktem Abstand von 10 mm hinter ihm, wobei der Lichtbogen des MAG Verfahrens (3) richtet sich unter einem Winkel β von 40 - 80° auf der Ebene XZ und unter einem Winkel von δ 40 - 80° auf der YZ Ebene, während die Schweißnaht (5) unter einem Fallwinkel α auf der Ebene XZ 1- 5° - und entsprechend auf der Ebene YZ unter einem Winkel γ 1 - 5° durch Laserstrahl, geschmolzen wird.

2. Verfahren zum Schweißen von Elementen für die Energiewirtschaft nach Anspruch 1, **dadurch gekennzeichnet, dass** der Schweißdraht in den Laserstrahlfokus und / oder in das Schmelzbad eingeführt wird.

## Revendications

1. Le procédé de soudage des éléments (1, 2) pour l'industrie énergétique, en particulier les panneaux de paroi étanche des chaudières industrielles et des générateurs à vapeur où les tuyaux des panneaux de paroi étanche sont raccordés avec les bandelettes (2) en aide du laser à fibre de haute énergie (3), le soudage est fait bilatéralement et frontalement du type "I" sans chanfreinage des bords liés et se **caractérise par** le soudage avec la vitesse au-dessus de 1 m/min, en conduisant le faisceau de laser en lame du métal liquide produit au cours du soudage par le procédé MAG (4) en enveloppe des gaz précieux ou directement derrière à distance jusqu'à 10 mm, mais l'arc électrique du procédé MAG (3) est dirigé sous l'angle γ -40-80° en plan XZ et sous l'angle δ - 40-80° en plan YZ et la soudure (5) refond en utilisant le faisceau de laser en le dirigeant sous l'angle d'incidence en plan XZ α - 1-5° et respectivement en plan YZ sous l'angle γ - 1-5°.

2. Le procédé du soudage des éléments pour l'industrie énergétique selon la restriction 1 se **caractérise par** le fil soudable dans le foyer du faisceau du laser et/ou dans la lame de soudage.
